# EUROPÄISCHE PATENTSCHRIFT

(11) **EP 3 925 428 B1**
(45) Veröffentlichungstag und Bekanntmachung des Hinweises auf die Patenterteilung: **31.12.2025**
(21) Anmeldenummer: 21170378.0
(22) Anmeldetag: 26.04.2021
(51) Int. Cl.: A01D 41/02, A01D 41/127

(54) **SELBSTFAHRENDE ERNTEMASCHINE SOWIE VERFAHREN ZUM BETREIBEN EINER SELBSTFAHRENDEN ERNTEMASCHINE**
SELF-DRIVING AGRICULTURAL HARVESTER AND AND METHOD FOR OPERATING A SELF-DRIVING AGRICULTURAL HARVESTER
MACHINE DE RÉCOLTE AUTONOME, AINSI QUE PROCÉDÉ DE FONCTIONNEMENT D'UNE MACHINE DE RÉCOLTE AUTONOME

(30) Priorität: 17.06.2020 DE 102020115974
(43) Veröffentlichungstag der Anmeldung: 22.12.2021
(73) Patentinhaber: CLAAS Selbstfahrende Erntemaschinen GmbH, 33428 Harsewinkel (DE)
(72) Erfinder: Heitmann, Christoph, 48231 Warendorf (DE); Neitemeier, Dennis, 59510 Lippetal (DE); Bönig, Ingo, 33330 Gütersloh (DE)
(74) Vertreter: CLAAS Gruppe

(56) Entgegenhaltungen:
- EP-B1- 3 146 833
- US-A- 4 893 241
- US-A1- 2006 280 523
- US-A1- 2019 364 733

## Beschreibung

Die vorliegende Erfindung betrifft eine selbstfahrende Erntemaschine gemäß dem Oberbegriff des Anspruches 1 sowie ein Verfahren zum Betreiben einer selbstfahrenden Erntemaschine gemäß dem Oberbegriff des Anspruches 14.

Selbstfahrende Erntemaschine (siehe US 2019/364733), wie unter anderem Feldhäcksler oder Mähdrescher, umfassen einen Antriebsmotor, der im Allgemeinen als Verbrennungsmotor ausgeführt ist, zumindest einen Riementrieb sowie zumindest zwei Arbeitsaggregate, welche durch den zumindest einen Riementrieb mittelbar oder unmittelbar angetrieben ist. Der Antriebsmotor treibt hierzu eine Antriebsriemenscheibe des zumindest einen Riementriebes an, wobei die Antriebsriemenscheibe unmittelbar auf der Kurbelwelle des Antriebsmotors angeordnet sein kann. Ein mittelbarer Antrieb eines Arbeitsaggregates durch einen Riementrieb kann durch eine Antriebswelle eines unmittelbar angetriebenen Arbeitsaggregates erfolgen.

Aus der EP 3 542 610 A1 ist es bekannt, mittels einer Laufrolle die Riemengeschwindigkeit am Auslaufpunkt der Abtriebsriemenscheibe eines Arbeitsaggregats zu messen. Dazu ist die Laufrolle am Lasttrum eines Riemens anliegend angeordnet und wird von diesem angetrieben. Hierbei wird die Laufrolle mittels einer Vorspannvorrichtung in den Riemen gedrückt, was eine geringfügige Umlenkung des Riemens bewirkt. Die Positionierung der Laufrolle erfolgt dabei in der möglichst unmittelbaren Nähe zu der Abtriebsriemenscheibe, um die Riemengeschwindigkeit am Auslaufpunkt des Arbeitsaggregates messen zu können. Die Umfangsgeschwindigkeit der Laufrolle entspricht somit der Riemengeschwindigkeit am Auslaufpunkt. Um die Drehzahl der Laufrolle zu messen, ist ein Hall-Sensor vorgesehen. Zur Erfassung der Drehzahl des Arbeitsaggregates kommt ein weiterer Sensor zum Einsatz. Anhand der Drehzahl des Arbeitsaggregates lässt sich die Riemengeschwindigkeit im Einlaufpunkt vom Leertrum des Riemens bestimmen. Aus der Differenz der Riemengeschwindigkeiten zwischen dem Einlaufpunkt und dem Auslaufpunkt an der Abtriebsriemenscheibe wird der auftretende Dehnschlupf bestimmt.

Nachteilig an dieser Art der Bestimmung des Dehnschlupfes ist, dass durch die Umlenkung die Lebensdauer des Riemens beeinflusst werden kann.

Der Erfindung liegt das Problem zu Grunde, die bekannte selbstfahrende Erntemaschine derart auszugestalten und weiterzubilden, dass die Nachteile des Standes der Technik vermeiden werden und insbesondere ein effizienterer Betrieb der selbstfahrenden Erntemaschine ermöglicht wird.

Das vorstehende Problem wird bei einer selbstfahrenden Erntemaschine gemäß dem Oberbegriff von Anspruch 1 durch die Merkmale des kennzeichnenden Teils von Anspruch 1 gelöst. Vorteilhafte Weiterbildungen sind Gegenstand der von Anspruch 1 abhängigen Unteransprüche.

Gemäß dem Anspruch 1 wird eine selbstfahrende Erntemaschine, umfassend einen Antriebsmotor, zumindest einen Riementrieb sowie zumindest zwei Arbeitsaggregate, welche durch den zumindest einen Riementrieb mittelbar oder unmittelbar angetrieben sind, vorgeschlagen, wobei dem zumindest einen Riementrieb wenigstens eine berührungslos arbeitende Messvorrichtung zur Bestimmung von Dehnschlupf zur ortsaufgelösten Belastungserfassung zumindest eines der Arbeitsaggregate zugeordnet ist. Durch die erfindungsgemäß ausgeführte Messvorrichtung lassen sich die aus dem Stand der Technik bekannten Nachteile vermeiden. Durch die berührungslose Bestimmung von Dehnschlupf wird ein Einfluss auf die Lebensdauer des Riementriebes vermieden. Die Bestimmung der Riemendehnung und des daraus resultierenden Dehnschlupfes erfolgt in Echtzeit. Die jeweilige Belastung eines der Arbeitsaggregate, die von dem Riementrieb mittelbar oder unmittelbar angetrieben werden, lässt sich einfacher erfassen und bestimmen.

Insbesondere kann die Erntemaschine eine Recheneinheit umfassen, welche zur Auswertung von Signalen, welche die wenigstens eine Messvorrichtung generiert, eingerichtet ist. Der Recheneinheit können die Signale der wenigstens einen Messvorrichtung durch ein geeignetes Kommunikationsmittel, drahtlos oder drahtgebunden, zugeleitet werden, um daraus die aktuell vorherrschende Belastung zumindest eines der Arbeitsaggregate zu bestimmen, welche von dem Riementrieb mittelbar oder unmittelbar angetrieben werden.

Bevorzugt kann die wenigstens eine Messvorrichtung zumindest zwei induktive Sensoren umfassen. Gegenüber optischen Sensoren zeichnen sich induktive Sensoren durch eine hohe Unempfindlichkeit gegenüber Verschmutzung sowie ein Unempfindlich gegen Vibrationen und Erschütterung aus. Darüber hinaus sind induktive Sensoren kostengünstig und zeichnen sich durch eine hohe Genauigkeit aus. Ein weiterer Vorteil induktiver Sensoren besteht im geringen Gewicht und ihrem einfachen mechanischen Aufbau.

Weiterhin kann an und/oder in einem Riemen des zumindest einen Riementriebes zumindest ein aus einem ferromagnetischen Material bestehendes Element angeordnet sein. Mittels der zumindest zwei in Reihe geschalteten induktiven Sensoren lässt sich die Zeit messen, die das zumindest eine Element benötigt, um den Abstand zwischen den zumindest zwei in Reihe geschalteten induktiven Sensoren zurückzulegen. Das zumindest eine Element kann hierzu in den Riemen eingebettet sein. Bevorzugt befindet sich das zumindest eine Element am oder im äußeren Bereich des Riemens, d.h. der Kontaktfläche mit einer Antriebsriemenscheibe sowie einer Abtriebsriemenscheibe abgewandten Seite des Riemens. Es können auch zwei oder mehr Elemente über den Umfang, insbesondere äquidistant, verteilt im und/oder am Riemen angeordnet sein. Dadurch lässt sich die Anzahl der Messungen pro Umlauf erhöhen. Hierdurch können Messungenauigkeiten kompensiert werden.

Insbesondere kann das zumindest eine aus einem ferromagnetischen Material bestehende Element quer zur Laufrichtung des Riemens eine größere Erstreckung aufweisen als in Laufrichtung. Hierdurch kann eine übermäßige Belastung des Riemens reduziert werden, wenn das zumindest eine aus einem ferromagnetischen Material bestehende Element durch eine Antriebsriemenscheibe, eine Abtriebsriemenscheibe, eine Umlenkrolle und/oder eine Spannrolle umgelenkt wird.

Besonders bevorzugt kann das zumindest eine aus einem ferromagnetischen Material bestehende Element einen im Wesentlichen zylindrischen Querschnitt aufweisen oder im Wesentlichen plattenförmig ausgeführt sein. Bevorzugt kann das zumindest eine aus einem ferromagnetischen Material bestehende Element als eine polygonale, vorzugsweise rechteckförmige, Platte ausgeführt sein.

Bevorzugt kann die wenigstens eine berührungslos arbeitende Messvorrichtung an einem der Abtriebe des zumindest einen Riementriebes angeordnet sein. Der Abtrieb weist eine Abtriebsriemenscheibe auf, welche eine Antriebswelle zumindest eines der Arbeitsaggregate unmittelbar antreibt. Durch die Anordnung der wenigstens einen berührungslos arbeitenden Messvorrichtung an dem Abtrieb lässt sich die Belastung der hiervon angetriebenen Arbeitsaggregate unmittelbar bestimmen. Vorzugsweise können ein induktiver Sensor vor der Abtriebsriemenscheibe und zwei weitere induktive Sensoren hinter der Abtriebsriemenscheibe angeordnet sein. Hierdurch lässt sich berührungslos die Riemengeschwindigkeit im Einlauf der Abtriebsriemenscheibe sowie am Auslauf der Abtriebsriemenscheibe messen. Aus der Geschwindigkeitsmessung kann der Dehnschlupf bestimmt werden. Die Bestimmung der Riemengeschwindigkeit im Einlauf der Abtriebsriemenscheibe kann auch auf andere Weise erfolgen.

Insbesondere kann die Recheneinheit dazu eingerichtet sein, mittels der Belastungserfassung einen von einem Sollzustand abweichenden Istzustand von Erntegutbearbeitungsmitteln zumindest eines der Arbeitsaggregate zu detektieren. Die Erntegutbearbeitungsmittel eines Arbeitsaggregates können einem Verschleiß unterliegen, welcher Einfluss auf die Leistungsaufnahme hat. Ebenso beeinflusst der Verschleiß die Qualität der Bearbeitung und Verarbeitung von Erntegut durch das jeweilige Arbeitsaggregat. Die Bestimmung der Abweichung des Istzustands vom Sollzustand durch die Belastungserfassung ermöglicht eine Überwachung des zumindest einen Arbeitsaggregates hinsichtlich des Auftretens von Verschleiß. Darüber hinaus ist es denkbar, dass sich mittels der Belastungserfassung auch Betriebsparametereinstellungen überwachen lassen, sodass unter gegebenen Erntebedingungen, wie beispielsweise Art des Erntegutes und Feuchtigkeit des Erntegutes, getätigte Einstellungen eines Arbeitsaggregates verifiziert werden können.

Dabei kann die Recheneinheit dazu eingerichtet sein, einen vom Sollzustand abweichenden Istzustand mittels einer Anzeigevorrichtung zu signalisieren. Hierbei kann die Recheneinheit dazu eingerichtet sein, die Anzeigevorrichtung anzusteuern, wenn ein Schwellwert für die Abweichung des Istzustands vom Sollzustand für ein spezifisches Arbeitsaggregat passiert wird. Die Anzeigevorrichtung visualisiert dann für das spezifische Arbeitsaggregat die erreichte Abweichung des Istzustands vom Sollzustand. Dies kann dazu dienen, eine Bedienperson auf die Notwendigkeit eines aktiven Eingriffs aufmerksam zu machen.

Bevorzugt kann die Recheneinheit dazu eingerichtet sein, in Abhängigkeit von der Größenordnung der Abweichung des Istzustands vom Sollzustand automatisiert eine Maßnahme zur Reduzierung der Abweichung einzuleiten und durchzuführen. Die einzuleitende und durchzuführende Maßnahme zur Reduzierung der Abweichung ist abhängig von der Art des Arbeitsaggregates und kann in der Anpassung eines Betriebsparameters, wie beispielsweise der Anpassung von Drehzahl, Abstand, etc., bestehen. Die einzuleitende und durchzuführende Maßnahme zur Reduzierung der Abweichung kann darüber hinaus in einer aktiven Behandlung des oder der Erntegutbearbeitungsmittel des Arbeitsaggregates bestehen, um den Sollzustand zumindest annähernd wiederherzustellen.

Insbesondere kann zumindest eines der Arbeitsaggregate eine Häckselvorrichtung mit einer Häckseltrommel mit über den Umfang verteilt angeordneten Häckselmessern sein. Das Arbeitsaggregat Häckseltrommel beispielsweise weist Erntegutbearbeitungsmittel in Form der Häckselmesser auf, welche durch eine Schleifvorrichtung nachgeschliffen werden. Die Schleifvorrichtung weist ein Schleifwerkzeug zum Schleifen der Häckselmesser auf. Hierdurch können die Häckselmesser in zyklischen Abständen - ohne, dass diese ausgebaut werden müssen -geschliffen werden.

Weiterhin kann ein weiteres Arbeitsaggregat eine Einzugsvorrichtung und/oder eine Nachbearbeitungsvorrichtung und /oder eine Nachbeschleunigervorrichtung sein. Zumindest eines der vorstehend genannten Arbeitsaggregate kann, wie die Häckselvorrichtung, von demselben Riementrieb unmittelbar angetrieben werden. Hierzu kann der Riementrieb zum Antreiben der Häckselvorrichtung als Hauptriementrieb ausgeführt sein, welcher eine Antriebsriemenscheibe umfasst, welche unmittelbar von dem Antriebsmotor angetrieben wird. Das Arbeitsaggregat Nachbeschleunigervorrichtung kann als zweites Arbeitsaggregat unmittelbar von dem Riementrieb zum Antreiben der Häckselvorrichtung angetrieben werden, Hierzu weist die Nachbeschleunigervorrichtung eine Antriebsriemenscheibe auf, die auf einer Antriebswelle der Nachbeschleunigervorrichtung angeordnet ist. Das Arbeitsaggregat Nachbearbeitungsvorrichtung kann mittelbar durch einen zusätzlichen Riementrieb angetrieben werden, wobei eine Antriebsriemenscheibe der Nachbearbeitungsvorrichtung auf einer Antriebswelle eines Arbeitsaggregates angeordnet ist, welche unmittelbar von dem Hauptriementrieb angetrieben ist. Beispielsweise kann dieses Arbeitsaggregat die Nachbeschleunigervorrichtung sein. Die Nachbearbeitungsvorrichtung, auch als Konditioniereinrichtung oder Corncracker bezeichnet, dient dem Aufschließen des Ernteguts, insbesondere von Maiskörnern im Erntegutstrom, um die Verwertbarkeit bzw. Energieausbeute bei einem Einsatz als Futtermittel bzw. in einer Biogasanlage zu erhöhen. Das Betreiben der Nachbearbeitungsvorrichtung ist im Allgemeinen optional möglich, d.h. entfällt beispielsweise bei der Grasernte, wozu die Nachbearbeitungsvorrichtung ausgebaut werden kann. Weiterhin kann zumindest eine Hydraulikpumpe als Arbeitsaggregat ausgeführt sein, welche von einem Riementrieb, beispielsweise dem Hauptriementrieb, angetrieben ist.

Bei der selbstfahrenden Erntemaschine kann es sich insbesondere um einen Feldhäcksler oder einen Mähdrescher handeln. Diese weisen einen Hauptriementrieb zum Antreiben von besonders leistungsintensiven Arbeitsaggregaten wie der Häckselvorrichtung oder dem Dreschwerk auf sowie einen oder mehrere zusätzliche Riementriebe.

Die eingangs gestellte Aufgabe wird weiterhin durch ein Verfahren zum Betreiben einer selbstfahrenden Erntemaschine gemäß dem nebengeordneten Anspruch 14 gelöst. Auf alle Ausführungen zu der vorschlagsgemäßen selbstfahrenden Erntemaschine wird verwiesen.

Gemäß dem Anspruch 14 wird ein Verfahren zum Betreiben einer selbstfahrende Erntemaschine, umfassend einen Antriebsmotor, zumindest einen Riementrieb sowie zumindest zwei Arbeitsaggregate, welche durch den zumindest einen Riementrieb mittelbar oder unmittelbar angetrieben werden, wobei dem zumindest einen Riementrieb wenigstens eine berührungslos arbeitende Messvorrichtung zugeordnet ist, mittels der eine Bestimmung von Dehnschlupf zur ortsaufgelösten Belastungserfassung zumindest eines der Arbeitsaggregate durchgeführt wird.

Dabei kann eine Leistungsbilanzierung in dem zumindest einen mit zumindest zwei Abtrieben ausgeführten Riementrieb durchgeführt werden. Somit kann auf die Belastung der Arbeitsaggregate geschlossen werden.

Die vorliegende Erfindung wird nachstehend anhand eines in den Zeichnungen dargestellten Ausführungsbeispieles näher erläutert.

Es zeigen:
- Fig. 1: eine schematische Darstellung einer als Feldhäcksler ausgeführten selbstfahrenden Erntemaschine in Seitenansicht;
- Fig. 2: eine schematische Darstellung eines Hauptantriebsstranges und in vergrößerter Ansicht eine Abtriebsriemenscheibe zum Antreiben einer Häckselvorrichtung des Feldhäckslers; und
- Fig. 3: eine Teilansicht eines als Keilrippenriemen ausgeführten Riemens des Hauptantriebsstranges im Querschnitt.

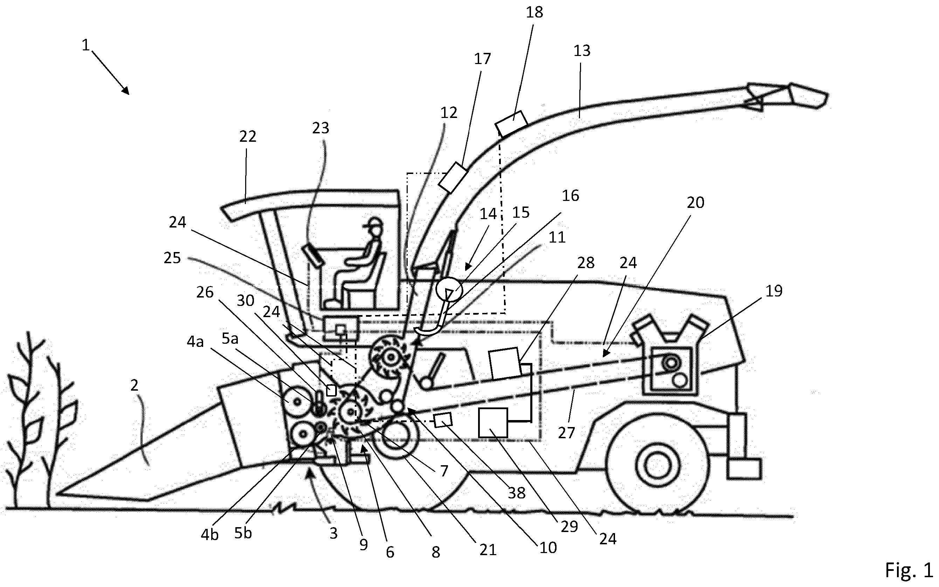

In Fig. 1 ist eine schematische Darstellung einer als Feldhäcksler 1 ausgeführten selbstfahrenden Erntemaschine in Seitenansicht gezeigt. Der Feldhäcksler 1 weist ein Vorsatzgerät 2 zum Ernten von, insbesondere stängeligem, Erntegut auf. Das Vorsatzgerät 2 kann unter anderem als sogenanntes Maisgebiss oder als Maispflücker ausgebildet sein. Für das Ernten von Gras kann das Vorsatzgerät 2 als Pick-up ausgeführt sein.

Das von dem Vorsatzgerät 2 aufgenommene Erntegut wird einer Einzugsvorrichtung 3 zugeführt. Die Einzugsvorrichtung 3 umfasst zumindest ein erstes Paar Walzen 4a, 4b und ein zweites Paar Walzen 5a, 5b, die an einem Rahmen oder einem Gehäuse angeordnet sind. Die zumindest zwei Walzenpaare 4a, 4b und 5a, 5b dienen dem Einzug und Vorpressen des aufgenommenen Erntegutes. Die Walzenpaare 4a, 4b und 5a, 5b bilden ein einstellbares Erntegutbehandlungsmittel. So können beispielsweise die Vorpresskraft als auch die Antriebsgeschwindigkeit der Walzenpaare 4a, 4b und 5a, 5b verändert werden, um an sich ändernde Erntegutmengen angepasst zu werden.

Der Einzugsvorrichtung 3 ist eine Häckselvorrichtung 6 nachgeordnet. Die Häckselvorrichtung 6 umfasst eine mit einer Vielzahl von Häckselmessern 8 bestückte, rotierend angetriebene Häckseltrommel 7. Zum Zerkleinern des in Form einer verdichteten Erntegutmatte von der Einzugsvorrichtung 3 zugeführten Erntegutes wirken die mit der Häckseltrommel 7 rotierenden Häckselmesser 8 mit einer ortsfest angeordneten Gegenschneide 9 der Häckselvorrichtung 6 zusammen. Der Abstand der Gegenschneide 9 relativ zum Hüllkreis der Häckselmesser 8 lässt sich ein- bzw. nachstellen. Ein möglichst geringer Abstand trägt zu einem reduzierten Kraftbedarf beim Schneiden und zu einer konstanten Schnittqualität bei. Eine der Häckselvorrichtung 6 zugeordnete Schleifvorrichtung 30 dient dazu, die Häckselmesser 8 bei Bedarf zu schärfen, um einer sich verschlechternden Häckselqualität wegen stumpfer Häckselmesser 8 sowie einem erhöhten Energiebedarf beim Antrieb der Häckselvorrichtung 6 zu begegnen. Hierzu weist die nur schematisch gezeigte Schleifvorrichtung 30 einen Antrieb mit einem Schleifwerkzeug zum Schleifen der Häckselmesser 8 auf.

Das aus der Häckselvorrichtung 6 austretende zerkleinerte Erntegut kann einer optional vorgesehenen Nachbearbeitungsvorrichtung 10 zugeführt werden. Die Nachbearbeitungsvorrichtung 10, auch als Konditioniereinrichtung oder Corncracker bezeichnet, dient dem Aufschließen von Maiskörnern, um die Verwertbarkeit bzw. Energieausbeute bei einem Einsatz als Futtermittel bzw. in einer Biogasanlage zu erhöhen. Derartige Nachbearbeitungsvorrichtungen 10 bestehen aus einem Walzenpaar mit profilierten Oberflächen, wobei die Walzen mit unterschiedlichen Drehzahlen angetrieben werden. Das Drehzahlverhältnis des Walzenpaares der Nachbearbeitungsvorrichtung 10 ist variierbar. Der Kornaufschluss wird insbesondere durch eine Spaltweite zwischen den beiden Walzen der Nachbearbeitungsvorrichtung 10 bestimmt. Je geringer die Spaltweite desto höher der Kornaufschluss. Die Spaltweite ist einstellbar. Die Nachbearbeitungsvorrichtung 10 ist bei Bedarf, z.B. bei der Ernte von Gras, aus dem Gutflussweg des Feldhäckslers 1 entfernbar.

Von der Häckselvorrichtung 6 bzw. der optionalen Nachbearbeitungsvorrichtung 10 gelangt das zerkleinerte Erntegut zu einer Nachbeschleunigungsvorrichtung 11, welche das Erntegut durch einen Förderschacht 12 und eine sich daran anschließende als Auswurfkrümmer ausgebildete Auswurfvorrichtung 13 an ein benachbart zu dem Feldhäcksler 1 fahrendes - nicht dargestelltes - Transportfahrzeug überlädt. Im Bereich der Nachbeschleunigungsvorrichtung 11 kann eine Siliermitteldosiervorrichtung 14 angeordnet sein, die mittels einer Förderpumpe 15 mit veränderlichem Fördervolumen eine Flüssigkeit in den Förderschacht 12 einbringt. Hierzu ist ein in dem Förderschacht 12 endender, sich in Stromrichtung des Ernteguts öffnender Injektor 16 vorgesehen, wodurch die Flüssigkeit in fein verspritzter Form auf das vorbeiströmende Erntegut appliziert wird. An der Auswurfvorrichtung 13 ist zumindest ein Sensor 17 angeordnet, welcher zumindest zur Bestimmung des Feuchtigkeitsgehalts des zerkleinerten Erntegutes respektive der Trockenmasse eingerichtet ist. Der zumindest eine Sensor 17 kann als NIR-Sensor ausgeführt sein, welcher auch zur Detektion von Inhaltsstoffen wie Rohasche oder Rohproteingehalt des vorbeiströmenden Erntegutes eingerichtet ist. Die Zuordnung eines oder mehrerer weiterer Sensoren 18 zur Bestimmung der Häcksellänge, der Strömungsgeschwindigkeit des Erntegutes und/oder des Massenstroms des vorbeiströmenden Erntegutes zu der Auswurfvorrichtung 13 kann vorgesehen sein.

Zum Antreiben des Feldhäckslers 1 ist eine als Verbrennungsmotor ausgebildete Antriebsmotor 19 vorgesehen. Der Antriebsmotor 19 steht mit zumindest einem Riementrieb 20 trieblich in Verbindung. Der Riementrieb 20 bildet einen Hauptantriebsstrang, der mechanisch angetriebene Arbeitsaggregate umfasst, wie die Häckselvorrichtung 6, die optionale Nachbearbeitungsvorrichtung 10 sowie die Nachbeschleunigungsvorrichtung 11. Ein Nebenantriebsstrang umfasst mechanisch und/oder hydraulisch angetriebene Arbeitsaggregate, wie das Vorsatzgerät 2 und die Einzugsvorrichtung 3.

Mittels eines Riemens 27 werden zumindest die Arbeitsaggregate Häckselvorrichtung 6 sowie Nachbeschleunigungsvorrichtung 11 unmittelbar angetrieben. Die Nachbearbeitungsvorrichtung 10 ist durch einen weiteren Riemen eines zusätzlichen - nicht dargestellten - Riementriebes mit der Nachbeschleunigungsvorrichtung 11 trieblich verbunden, wird somit mittelbar von dem Riemen 27 angetrieben. Das Vorsatzgerät 2 sowie die Einzugsvorrichtung 3 sind durch den Nebenantriebsstrang antreibbar, welcher mechanisch mit der Häckselvorrichtung 6 gekoppelt sein kann, leistungsverzweigt mechanisch und hydrostatisch betreibbar ist oder unabhängig von der Häckselvorrichtung 6 hydrostatisch betreibbar ist. Für den rein hydrostatischen Antrieb von Vorsatzgerät 2 sowie Einzugsvorrichtung 3 ist eine Hydraulikpumpe 28 vorgesehen, die zumindest einen Hydraulikmotor 29 antreibt. Die Hydraulikpumpe 28 ist bevorzugt als eine im Schluckvolumen verstellbare Pumpe ausgeführt. Der Hydraulikmotor 29 kann als Konstantmotor ausgeführt sein. Weiterhin ist ein, insbesondere hydrostatischer, Fahrantrieb 21 vorgesehen, mit welchem die Fahrgeschwindigkeit des Feldhäckslers 1 regelbar ist.

Mit 24 ist ein Bussystem bezeichnet, welches unter anderem die Sensoren 17, 18 an der Auswurfvorrichtung 13 sowie einen Sensor 26, insbesondere einen Schichthöhensensor, der Einzugsvorrichtung 3, Steuergeräte wie ein Motorsteuergerät des Antriebsmotors 19, eine in einer Kabine 22 angeordnete Anzeigevorrichtung 23, die Schleifvorrichtung 30 und dergleichen mit der zumindest einen Recheneinheit 25 verbindet.

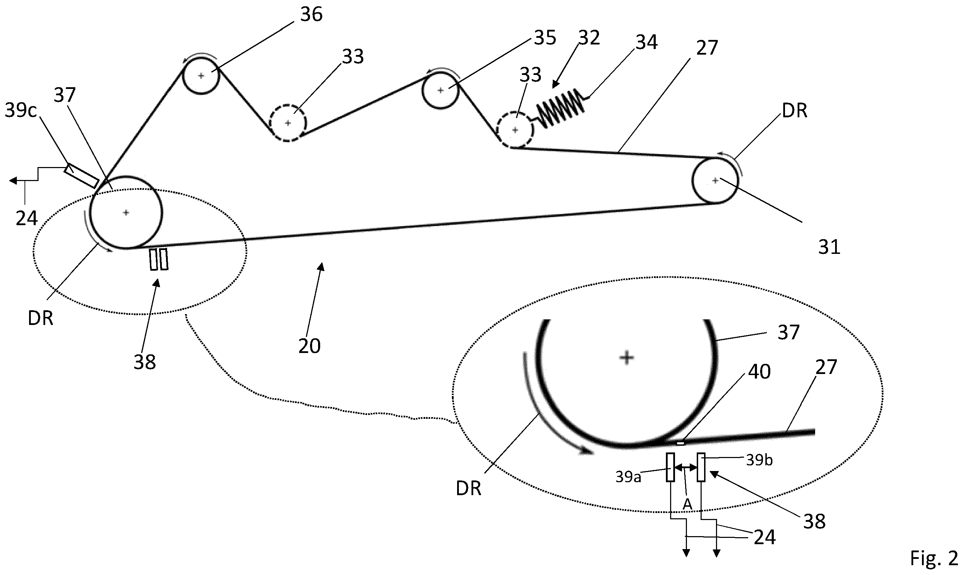

In Fig. 2 ist eine schematische Darstellung eines Hauptantriebsstranges und in vergrößerter Ansicht eine Abtriebsriemenscheibe 37 als Abtrieb zum Antreiben der Häckselvorrichtung 6 des Feldhäckslers 1 gezeigt. Mit 31 ist eine Antriebsriemenscheibe bezeichnet, welche von dem Antriebsmotor 19 angetrieben wird. Hierzu kann die Antriebsriemenscheibe 31 drehfest mit einer Ausgangswelle des Antriebsmotors 19 verbunden sein. Eine oder mehrere Spannrollen 33 dienen der Aufrechterhaltung der Riemenspannung des Riemens 27. Mit 32 ist eine Spannvorrichtung bezeichnet, welche eine Spannrolle 33 sowie einen Aktor 34 zur Aufbringung einer Spannkraft umfasst. Durch eine Riemenscheibe 35 als weiterer Abtrieb wird die Hydraulikpumpe 28 angetrieben. Eine weitere Riemenscheibe 36 als weiterer Abtrieb treibt die Nachbeschleunigungsvorrichtung 11 sowie die trieblich mit dieser verbundene Nachbearbeitungsvorrichtung 10 an. Ein Pfeil DR gibt die Rotationsrichtung der dem Abtrieb dienenden Abtriebsriemenscheibe 37 bzw. der dem Antrieb dienenden Antriebsriemenscheibe 31 wieder.

Dem zumindest einen Riementrieb 20 ist wenigstens eine berührungslos arbeitende Messvorrichtung 38 zur Bestimmung von Dehnschlupf zur ortsaufgelösten Belastungserfassung zumindest eines der Arbeitsaggregate, hier der Häckselvorrichtung 6, zugeordnet. Mit Dehnschlupf ist der Schlupf bezeichnet, der aufgrund des Dehnungsausgleichs eine relative Bewegung des Riemens 27 auf der hier und vorzugsweise als Abtrieb der Häckselvorrichtung 6 dienenden Abtriebsriemenscheibe 37 verursacht wird. Die Messvorrichtung 38 steht durch das Bussystem 24 mit der Recheneinheit 25 in Verbindung. Die berührungslos arbeitende Messvorrichtung 38 umfasst zumindest zwei induktive Sensoren 39a, 39b. Die zumindest zwei induktiven Sensoren 39a, 39b sind hinter der der Abtriebsriemenscheibe 37, d.h. im Bereich des Auslaufs, angeordnet, mit welcher die Häckselvorrichtung 6 angetrieben wird. Die zumindest zwei induktiven Sensoren 39a, 39b sind in Längsrichtung des Riementriebes 20 gesehen in einem Abstand A zueinander beabstandet angeordnet. An und/oder in dem Riemen 27 des zumindest einen Riementriebes 20 ist zumindest ein aus einem ferromagnetischen Material bestehendes Element 40 angeordnet. Zusätzlich kann vor der Abtriebsriemenscheibe 37, d.h.im Bereich des Einlaufs der Abtriebsriemenscheibe 37, ein weiterer induktiver Sensor 39c angeordnet sein. Der weitere Sensor 39c kann durch das Bussystem 24 mit der mit der Recheneinheit 25 in Verbindung stehen. Der weitere Sensor 39c kann Teil der Messvorrichtung 38 sein. Hierdurch lässt sich berührungslos die jeweilige Riemengeschwindigkeit im Einlauf der Abtriebsriemenscheibe 37 sowie am Auslauf der Abtriebsriemenscheibe 37 messen. Aus den Geschwindigkeitsmessungen kann der Dehnschlupf bestimmt werden. Die Bestimmung der Riemengeschwindigkeit im Einlauf der Abtriebsriemenscheibe 37 kann auch auf andere Weise erfolgen.

Das zumindest eine aus einem ferromagnetischen Material bestehende Element 40 weist quer zur Laufrichtung bzw. Längsrichtung des Riemens 27 eine größere Erstreckung auf als in Laufrichtung. Das zumindest eine aus einem ferromagnetischen Material bestehende Element 40 weist einen im Wesentlichen zylindrischen, insbesondere kreiszylindrischen, Querschnitt auf oder ist im Wesentlichen plattenförmig ausgeführt. Bevorzugt kann das zumindest eine aus einem ferromagnetischen Material bestehende Element 40 als eine polygonale, vorzugsweise rechteckförmige, Platte ausgeführt sein. Es können auch zwei oder mehr Elemente 40 über den Umfang, insbesondere äquidistant, verteilt im und/oder am Riemen 27 angeordnet sein. Dadurch lässt sich die Anzahl der Messungen pro Umlauf erhöhen.

Mittels der zumindest zwei induktiven Sensoren 39a, 39b der Messvorrichtung 38 kann die Zeit, die ein Element 40 vom ersten Sensor bis zum zweiten Sensor benötigt, gemessen werden. Mit dem bekannten Abstand A der zwei induktiven Sensoren 39a, 39b zueinander kann die Riemengeschwindigkeit berührungslos bestimmt werden. Wird die Häckseltrommel 7 stärker belastet, längt sich der Riemen 27 am Auslauf der Abtriebsriemenscheibe 37 und die Riemengeschwindigkeit erhöht sich an dieser Stelle. Der Dehnschlupf zwischen der Abtriebsriemenscheibe 37 und dem Riemen 27 wird dann größer. Dieser Dehnschlupf ist proportional zum auf die Häckseltrommel 7 übertragenen Drehmoment. Der Dehnschlupf ist insbesondere vom Material des Riemens 27 bzw. dessen elastischen Eigenschaften sowie dem Durchmesser der getriebenen Abtriebsriemenscheibe 37 und der Oberflächenbeschaffenheit der Abtriebsriemenscheibe 37 abhängig.

Mittels der ortsaufgelösten Belastungserfassung durch die Messvorrichtung 38 lässt sich beispielsweise eine durch eine abnehmende Schärfe der Häckselmesser 8 verursachte Belastungszunahme der Häckselvorrichtung 6 bestimmen. Die Belastungserfassung kann dabei in Echtzeit durchgeführt werden. Eine Zunahme der Drehmomentaufnahme der Häckselvorrichtung 6 lässt auf eine Abnahme der Schneidschärfe der Häckselmesser 8 schließen. Die Zunahme der Drehmomentaufnahme aufgrund der Abnahme der Schneidschärfe erfolgt dabei im Wesentlichen kontinuierlich während des Häckselprozesses. Eine sprunghafte Zunahme der Drehmomentaufnahme kann auf eine Überlastungssituation zurückzuführen sein. Darüber hinaus ermöglicht die Messvorrichtung 38 eine Leistungsbilanzierung an dem Riementrieb 20, wobei dieser mehrere Abtriebe in Form der Riemenscheiben 35, 36 bzw. der Abtriebsriemenscheibe 37 aufweist.

Die Recheneinheit 25 ist dazu eingerichtet, mittels der permanent durchgeführten Belastungserfassung einen von einem Sollzustand abweichenden Istzustand von Erntegutbearbeitungsmitteln eines der zumindest zwei Arbeitsaggregate zu detektieren, hier der Schneidschärfe der Häckselmesser 8 der Häckselvorrichtung 6. Des Weiteren ist die Recheneinheit 25 dazu eingerichtet, einen vom Sollzustand abweichenden Istzustand mittels der Anzeigevorrichtung 23 einer Bedienperson des Feldhäckslers 1 zu signalisieren. Die Recheneinheit 25 ist dazu eingerichtet sein, die Anzeigevorrichtung 23 anzusteuern, wenn ein Schwellwert für die Abweichung des Istzustands vom Sollzustand für ein spezifisches Arbeitsaggregat passiert wird. Die Anzeigevorrichtung 23 visualisiert dann für das spezifische Arbeitsaggregat die Abweichung des Istzustands vom Sollzustand. Hierzu kann die Schneidschärfe auf der Anzeigevorrichtung 23 beispielsweise anhand einer Skala angezeigt werden. Gemäß einem Ausführungsbeispiel kann dies eine Prozentskala sein, welche von 0 bis 100 Prozent reicht. Dabei bedeutet 0% eine ganz geringe Schneidschärfe, also stumpfe Häckselmesser 8, und 100% bedeutet eine sehr hohe Schneidschärfe, also sehr scharfe Häckselmesser 8. Die tatsächliche Schneidschärfe von geschärften Häckselmessern 8 liegt in der Regel unterhalb von 100%, insbesondere unterhalb von 90%, um einen Sollzustand zu definieren, der an die realen Betriebsbedingungen angepasst ist. Hierdurch soll ein übermäßiger Verschleiß durch häufiges Schärfen der Häckselmesser 8 sowie eine übermäßige Anzahl von Betriebsunterbrechungen vermieden werden. Der Sollzustand, hier die prozentuale Schneidschärfe, ist durch die Bedienperson vorgebbar.

Die Recheneinheit 25 ist dazu eingerichtet, in Abhängigkeit von der Größenordnung der Abweichung des Istzustands vom Sollzustand automatisiert eine Maßnahme zur Reduzierung der Abweichung einzuleiten. Die einzuleitende und durchzuführende Maßnahme zur Reduzierung der Abweichung ist abhängig von der Art des Arbeitsaggregates und kann in der Anpassung eines Betriebsparameters, wie beispielsweise der Anpassung von Drehzahl, Abstand, etc., bestehen. Die einzuleitende und durchzuführende Maßnahme zur Reduzierung der Abweichung kann darüber hinaus in einer aktiven Behandlung des oder der Erntegutbearbeitungsmittel des Arbeitsaggregates bestehen, um den Sollzustand zumindest annähernd wiederherzustellen. Hierzu kann im Fall der Häckselvorrichtung 6 die zugeordnete Schleifvorrichtung 30 angesteuert werden, um die Häckselmesser 8 nachzuschleifen. Dieser Vorgang wird in Abhängigkeit von der jeweils aktuellen Betriebssituation des Feldhäckslers 1 ausgelöst und angesteuert, um eine Betriebsunterbrechung während des Häckselns zu vermeiden. Beispielsweise kann der Vorgang des Nachschleifens während einer Vorgewendefahrt initiiert und durchgeführt werden.

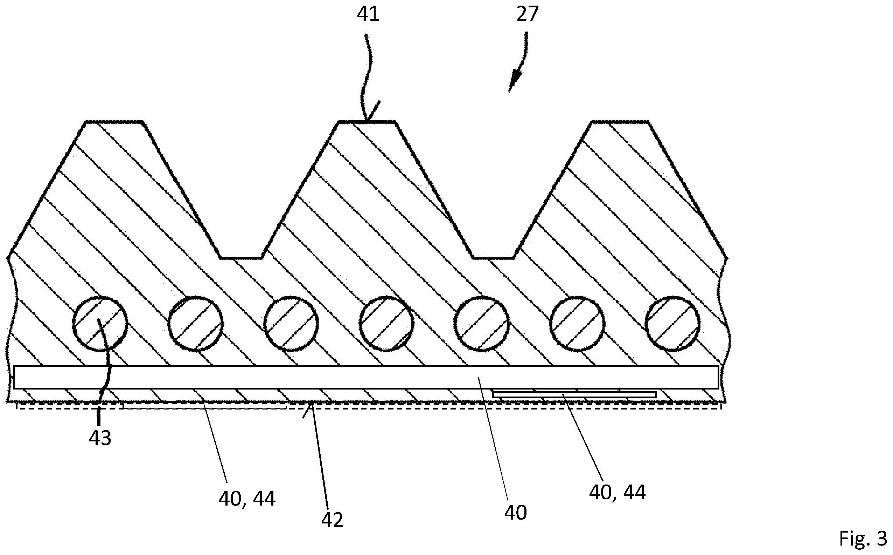

In Fig. 3 ist schematisch eine Teilansicht eines als Keilrippenriemen ausgeführten Riemens 27 des Hauptantriebsstranges 20 im Querschnitt dargestellt. Der Riemen 27 ist als Keilrippenriemen ausgebildet und weist eine profilierten Antriebsseite 41 und eine Rückenseite 42 auf, wie in der Fig. 3 prinzipiell und im Querschnitt dargestellt. Der als Keilrippenriemen ausgeführte Riemen 27 kann mit Zugträgern bzw. Verstärkungselementen 43 aus nicht leitfähigem und insbesondere nicht ferromagnetischen Material ausgebildet sein, die in Längsrichtung des Riemens 27 angeordnet sind. Quer zur Längsrichtung bzw. zur Laufrichtung des Riemens 27 ist zumindest ein aus einem ferromagnetischen Material bestehendes Element 40 eingebettet, welches sich im Wesentlichen über die gesamte Breite des Riemens 27 erstreckt. Bevorzugt befindet sich das zumindest eine Element 40 am oder im äußeren Bereich des Riemens 27, d.h. auf der der profilierten Antriebsseite 41 abgewandten Rückenseite 42 des Riemens 27. Das zumindest eine aus einem ferromagnetischen Material bestehende Element 40 weist im dargestellten Ausführungsbeispiel einen kreiszylindrischen Querschnitt auf. Besonders bevorzugt kann das zumindest eine aus einem ferromagnetischen Material bestehende Element 40 als eine rechteckförmige Platte 44 ausgeführt sein, was alternativ in Fig. 3 angedeutet ist. Dabei kann das zumindest eine als Platte 44 ausgeführte Element 40 aus Elektroblech mit besonders guten ferromagnetischen Eigenschaften gefertigt sein.

Die strichlinierte Darstellung in Fig. 3 zeigt ein Element 40, welches am Riemen 27, d.h. auf der Rückenseite 42 des Riemens 27 angeordnet ist. Hierbei handelt es sich um ein im Wesentlichen plattenförmig ausgeführtes Element 40, welches auf der Oberfläche des Riemens 27 angeordnet ist.

Die von einem separaten Riementrieb angetriebene Nachbearbeitungsvorrichtung 10 kann ebenfalls mit einer Messvorrichtung 38 ausgeführt werden, wobei der Riemen gleichfalls zumindest ein aus einem ferromagnetischen Material bestehendes Element 40 aufweist. Die Überwachung des Riementriebes zum Antreiben der Nachbearbeitungsvorrichtung 10 ermöglicht es beispielsweise die korrekte Einstellung des Walzenabstands des Walzenpaares zu bestimmen und einzustellen bzw. zu überwachen.

**Bezugszeichenliste**

| | | | |
|---|---|---|---|
| 1 | Feldhäcksler | 31 | Antriebsriemenscheibe |
| 2 | Vorsatzgerät | 32 | Spannvorrichtung |
| 3 | Einzugsvorrichtung | 33 | Spannrolle |
| 4a, 4b | Walzen | 34 | Aktor |
| 5a, 5b | Walzen | 35 | Riemenscheibe |
| 6 | Häckselvorrichtung | 36 | Riemenscheibe |
| 7 | Häckseltrommel | 37 | Riemenscheibe |
| 8 | Häckselmesser | 38 | Messvorrichtung |
| 9 | Gegenschneide | 39a, 39b | Induktiver Sensor |
| 10 | Nachbearbeitungsvorrichtung | 39c | Induktiver Sensor |
| 11 | Nachbeschleunigungsvorrichtung | 40 | Element |
| 12 | Förderschacht | 41 | Antriebsseite |
| 13 | Auswurfvorrichtung | 42 | Rückenseite |
| 14 | Siliermitteldosiervorrichtung | 43 | Verstärkungselement |
| 15 | Förderpumpe | | |
| 16 | Injektor | A | Abstand |
| 17 | Sensor | DR | Rotationsrichtung |
| 18 | Sensor | | |
| 19 | Antriebsmotor | | |
| 20 | Riementrieb | | |
| 21 | Fahrantrieb | | |
| 22 | Kabine | | |
| 23 | Anzeigevorrichtung | | |
| 24 | Bussystem | | |
| 25 | Recheneinheit | | |
| 26 | Sensor | | |
| 27 | Riemen | | |
| 28 | Hydraulikpumpe | | |
| 29 | Hydraulikmotor | | |
| 30 | Schleifvorrichtung | | |

## Patentansprüche

1. Selbstfahrende Erntemaschine (1), umfassend einen Antriebsmotor (19), zumindest einen Riementrieb (20) sowie zumindest zwei Arbeitsaggregate (2, 3, 6, 10, 11), welche durch den zumindest einen Riementrieb (20) mittelbar oder unmittelbar angetrieben sind, **dadurch gekennzeichnet, dass** dem zumindest einen Riementrieb (20) wenigstens eine berührungslos arbeitende Messvorrichtung (38) zur Bestimmung von Dehnschlupf zur ortsaufgelösten Belastungserfassung zumindest eines der Arbeitsaggregate (2, 3, 6, 10, 11) zugeordnet ist.

2. Selbstfahrende Erntemaschine (1) nach Anspruch 1, **dadurch gekennzeichnet, dass** die Erntemaschine (1) eine Recheneinheit (25) umfasst, welche zur Auswertung von Signalen, welche die wenigstens eine Messvorrichtung (38) generiert, eingerichtet ist.

3. Selbstfahrende Erntemaschine (1) nach Anspruch 1 oder 2, **dadurch gekennzeichnet, dass** die wenigstens eine Messvorrichtung (38) zumindest zwei induktive Sensoren (39a, 39b) umfasst.

4. Selbstfahrende Erntemaschine (1) nach einem der Ansprüche 1 bis 3, **dadurch gekennzeichnet, dass** an und/oder in einem Riemen (27) des zumindest einen Riementriebes (20) zumindest ein aus einem ferromagnetischen Material bestehendes Element (40) angeordnet ist.

5. Selbstfahrende Erntemaschine (1) nach Anspruch 4, **dadurch gekennzeichnet, dass** das zumindest eine aus einem ferromagnetischen Material bestehende Element (40) quer zur Laufrichtung des Riemens (27) eine größere Erstreckung aufweist als in Laufrichtung.

6. Selbstfahrende Erntemaschine (1) nach Anspruch 4 oder 5, **dadurch gekennzeichnet, dass** das zumindest eine aus einem ferromagnetischen Material bestehende Element (40) einen im Wesentlichen zylindrischen Querschnitt aufweist oder im Wesentlichen plattenförmig ausgeführt ist.

7. Selbstfahrende Erntemaschine (1) nach einem der vorangehenden Ansprüche, **dadurch gekennzeichnet, dass** die wenigstens eine berührungslos arbeitende Messvorrichtung (38) an einem zumindest einem Abtrieb (35, 36, 37) des zumindest einen Riementriebes (20) angeordnet ist.

8. Selbstfahrende Erntemaschine (1) nach einem der vorangehenden Ansprüche, **dadurch gekennzeichnet, dass** die Recheneinheit (25) dazu eingerichtet ist, mittels der Belastungserfassung einen von einem Sollzustand abweichenden Istzustand von Erntegutbearbeitungsmitteln (8) zumindest eines der Arbeitsaggregate (2, 3, 6, 10, 11) zu detektieren.

9. Selbstfahrende Erntemaschine (1) nach Anspruch 8, **dadurch gekennzeichnet, dass** die Recheneinheit (25) dazu eingerichtet ist, einen vom Sollzustand abweichenden Istzustand mittels einer Anzeigevorrichtung (23) zu signalisieren.

10. Selbstfahrende Erntemaschine (1) nach Anspruch 8 oder 9, **dadurch gekennzeichnet, dass** die Recheneinheit (23) dazu eingerichtet ist, in Abhängigkeit von der Größenordnung der Abweichung des Istzustands vom Sollzustand automatisiert eine Maßnahme zur Reduzierung der Abweichung einzuleiten.

11. Selbstfahrende Erntemaschine (1) nach einem der vorangehenden Ansprüche, **dadurch gekennzeichnet, dass** eines der zumindest zwei Arbeitsaggregate eine Häckselvorrichtung (6) mit einer Häckseltrommel (7) mit über den Umfang verteilt angeordneten Häckselmessern (8) ist.

12. Selbstfahrende Erntemaschine (1) nach Anspruch 11, **dadurch gekennzeichnet, dass** die Erntemaschine (1) eine durch einen Antrieb antreibbare Schleifvorrichtung (30) mit einem Schleifwerkzeug zum Schleifen der Häckselmesser (8) aufweist.

13. Selbstfahrende Erntemaschine (1) nach einem der vorangehenden Ansprüche, **dadurch gekennzeichnet, dass** ein weiteres Arbeitsaggregat eine Einzugsvorrichtung (3) und/oder eine Nachbearbeitungsvorrichtung (10) und /oder eine Nachbeschleunigervorrichtung (11) ist.

14. Verfahren zum Betreiben einer selbstfahrende Erntemaschine (1), umfassend einen Antriebsmotor (19), zumindest einen Riementrieb (20) sowie zumindest zwei Arbeitsaggregate (2, 3, 6, 10, 11), welche durch den zumindest einen Riementrieb (20) mittelbar oder unmittelbar angetrieben werden, **dadurch gekennzeichnet, dass** dem zumindest einen Riementrieb (20) wenigstens eine berührungslos arbeitende Messvorrichtung (38) zugeordnet ist, mittels der eine Bestimmung von Dehnschlupf zur ortsaufgelösten Belastungserfassung zumindest eines der Arbeitsaggregate (2, 3, 6, 10, 11) durchgeführt wird.

15. Verfahren nach Anspruch 14, **dadurch gekennzeichnet, dass** eine Leistungsbilanzierung in dem zumindest einen mit mehreren Abtrieben (35, 36,37) ausgeführten Riementrieb (20) durchgeführt wird.

## Claims

1. A self-propelled harvesting machine (1), comprising a propulsion engine (19), at least one belt drive (20), as well as at least two working assemblies (2, 3, 6, 10, 11) which are driven, directly or indirectly, by the at least one belt drive (20), **characterized in that** at least one contactlessly-operating measuring device (38) for determining elastic slip is associated with the at least one belt drive (20) for the spatially resolved detection of the loading of at least one of the working assemblies (2, 3, 6, 10, 11).

2. The self-propelled harvesting machine (1) according to claim 1, **characterized in that** the harvesting machine (1) comprises a computing unit (25) which is configured to analyse signals which the at least one measuring device (38) generates.

3. The self-propelled harvesting machine (1) according to claim 1 or claim 2, **characterized in that** the at least one measuring device (38) comprises at least two inductive sensors (39a, 39b).

4. The self-propelled harvesting machine (1) according to one of claims 1 to 3, **characterized in that** at least one element (40) consisting of a ferromagnetic material is disposed on and/or in a belt (27) of the at least one belt drive (20).

5. The self-propelled harvesting machine (1) according to claim 4, **characterized in that** the at least one element (40) consisting of a ferromagnetic material has a greater extent transversely to the running direction of the belt (27) than in the running direction.

6. The self-propelled harvesting machine (1) according to claim 4 or claim 5, **characterized in that** the at least one element (40) consisting of a ferromagnetic material has a substantially cylindrical cross section or is substantially plate-shaped.

7. The self-propelled harvesting machine (1) according to one of the preceding claims, **characterized in that** the at least one contactlessly-operating measuring device (38) is disposed on at least one take-off (35, 36, 37) of the at least one belt drive (20).

8. The self-propelled harvesting machine (1) according to one of the preceding claims, **characterized in that** the computing unit (25) is configured to detect, by means of the loading detection, an actual state of crop processing means (8) of at least one of the working assemblies (2, 3, 6, 10, 11) which deviates from a target state.

9. The self-propelled harvesting machine (1) according to claim 8, **characterized in that** the computing unit (25) is configured to signal an actual state which deviates from the target state by means of a display device (23).

10. The self-propelled harvesting machine (1) according to claim 8 or claim 9, **characterized in that** the computing unit (23) is configured to automatically initiate an action for reducing the deviation as a function of the magnitude of the deviation of the actual state from the target state.

11. The self-propelled harvesting machine (1) according to one of the preceding claims, **characterized in that** one of the at least two working assemblies is a chopping device (6) with a chopping drum (7) with chopping knives (8) distributed over the circumference.

12. The self-propelled harvesting machine (1) according to claim 11, **characterized in that** the harvesting machine (1) has a sharpening device (30) which can be driven by a drive and which has a sharpening tool for sharpening the chopping knives (8).

13. The self-propelled harvesting machine (1) according to one of the preceding claims, **characterized in that** a further working assembly is a feeder device (3) and/or a post-processing device (10) and/or a post-accelerator device (11).

14. A method for operating a self-propelled harvesting machine (1), comprising a propulsion engine (19), at least one belt drive (20), as well as at least two working assemblies (2, 3, 6, 10, 11) which are driven, directly or indirectly, by the at least one belt drive (20), **characterized in that** at least one contactlessly-operating measuring device (38) is associated with the at least one belt drive (20), by means of which a determination of elastic slip is carried out for the spatially resolved detection of the loading of at least one of the working assemblies (2, 3, 6, 10, 11).

15. The method according to claim 14, **characterized in that** power balancing is carried out in the at least one belt drive (20) constructed with a plurality of take-offs (35, 36, 37).

## Revendications

1. Machine de récolte (1) automotrice, comprenant un moteur d'entraînement (19), au moins une transmission à courroie (20) ainsi qu'au moins deux organes de travail (2, 3, 6, 10, 11) qui sont entraînés indirectement ou directement par la transmission à courroie (20), au nombre d'au moins une, **caractérisée en ce qu'**est associé à la transmission à courroie (20), au nombre d'au moins une, au moins un dispositif de mesure (38) qui fonctionne sans contact et est destiné à déterminer un glissement d'allongement en vue de la mesure de charge à résolution spatiale d'au moins un des organes de travail (2, 3, 6, 10, 11).

2. Machine de récolte (1) automotrice selon la revendication 1, **caractérisée en ce que** la machine de récolte (1) comprend une unité de calcul (25) qui est conçue pour l'évaluation de signaux générés par le dispositif de mesure (38), au nombre d'au moins un.

3. Machine de récolte (1) automotrice selon la revendication 1 ou 2, **caractérisée en ce que** le dispositif de mesure (38), au nombre d'au moins un, comprend au moins deux capteurs inductifs (39a, 39b).

4. Machine de récolte (1) automotrice selon une des revendications 1 à 3, **caractérisée en ce que** sur et/ou dans une courroie (27) de la transmission à courroie (20), au nombre d'au moins une, est disposé au moins un élément (40) constitué d'un matériau ferromagnétique.

5. Machine de récolte (1) automotrice selon la revendication 4, **caractérisée en ce que** l'élément (40), au nombre d'au moins un, constitué d'un matériau ferromagnétique, présente une dimension perpendiculaire au sens de déplacement de la courroie (27), qui est plus grande que dans le sens de déplacement.

6. Machine de récolte (1) automotrice selon la revendication 4 ou 5, **caractérisée en ce que** l'élément (40), au nombre d'au moins un, constitué d'un matériau ferromagnétique, présente une section transversale sensiblement cylindrique ou est réalisé sensiblement sous forme de plaque.

7. Machine de récolte (1) automotrice selon une des revendications précédentes, **caractérisée en ce que** le dispositif de mesure (38), au nombre d'au moins un, fonctionnant sans contact, est placé sur un moyen mené (35, 36, 37), au nombre d'au moins un, de la transmission à courroie (20), au nombre d'au moins une.

8. Machine de récolte (1) automotrice selon une des revendications précédentes, **caractérisée en ce que** l'unité de calcul (25) est conçue pour détecter, à l'aide de la mesure de la charge, un état réel de moyens de traitement de récolte (8) d'au moins un des organes de travail (2, 3, 6, 10, 11), qui s'écarte d'un état de consigne.

9. Machine de récolte (1) automotrice selon la revendication 8, **caractérisée en ce que** l'unité de calcul (25) est conçue pour signaler un état réel s'écartant de l'état de consigne, à l'aide d'un dispositif de visualisation (23).

10. Machine de récolte (1) automotrice selon la revendication 8 ou 9, **caractérisée en ce que** l'unité de calcul (23) est conçue pour déclencher de façon automatisée une mesure de réduction de l'écart, en fonction de l'ordre de grandeur de l'écart de l'état réel par rapport à l'état de consigne.

11. Machine de récolte (1) automotrice selon une des revendications précédentes, **caractérisée en ce que** l'un des organes de travail, au nombre d'au moins deux, est un dispositif hacheur (6) doté d'un tambour hacheur (7) comprenant des couteaux de hachage (8) répartis sur le pourtour.

12. Machine de récolte (1) automotrice selon la revendication 11, **caractérisée en ce que** la machine de récolte (1) présente un dispositif d'affûtage (30) pouvant être entraîné par un moyen d'entraînement et comportant un outil d'affûtage pour affûter les couteaux de hachage (8).

13. Machine de récolte (1) automotrice selon une des revendications précédentes, **caractérisée en ce qu'**un autre organe de travail est un dispositif d'alimentation (3) et/ou un dispositif de post-traitement (10) et/ou un distributeur-accélérateur (11).

14. Procédé pour faire fonctionner une machine de récolte (1) automotrice comprenant un moteur d'entraînement (19), au moins une transmission à courroie (20) ainsi qu'au moins deux organes de travail (2, 3, 6, 10, 11) qui sont entraînés indirectement ou directement par la transmission à courroie (20), au nombre d'au moins une, **caractérisé en ce qu'**est associé à la transmission à courroie (20), au nombre d'au moins une, au moins un dispositif de mesure (38) qui fonctionne sans contact et avec lequel est effectuée une détermination d'un glissement d'allongement, en vue de la mesure de charge à résolution spatiale d'au moins un des organes de travail (2, 3, 6, 10, 11).

15. Procédé selon la revendication 14, **caractérisé en ce qu'**un bilan est dressé dans la transmission à courroie (20), au nombre d'au moins une, réalisée avec plusieurs moyens menés (35, 36, 37).
